**Europäisches Patentamt**

**European Patent Office**

**Office européen des brevets**

(19)

(11) Veröffentlichungsnummer : **0 071 902**
**B1**

(12)

# EUROPÄISCHE PATENTSCHRIFT

(45) Veröffentlichungstag der Patentschrift :
26.03.86

(21) Anmeldenummer : 82106883.0

(22) Anmeldetag : 30.07.82

(51) Int. Cl.⁴ : **B 27 B   5/22**

(54) **Spanabhebende Heimwerkermaschine, insbesondere Wippsäge.**

(30) Priorität : 07.08.81 DEU 8123262

(43) Veröffentlichungstag der Anmeldung :
16.02.83 Patentblatt 83/07

(45) Bekanntmachung des Hinweises auf die Patenterteilung : 26.03.86 Patentblatt 86/13

(84) Benannte Vertragsstaaten :
**AT BE CH DE FR GB IT LI**

(56) Entgegenhaltungen :
**DE-A- 1 453 033**
**DE-A- 2 011 033**
**DE-C-   494 472**
**FR-A-   965 169**
**FR-A-   989 220**
**US-A- 3 081 841**
**US-E-     30 689**

(73) Patentinhaber : **Alois Kober KG, Maschinenfabrik**
**Ichenhauserstrasse 14**
**D-8871 Kötz 2 (DE)**

(72) Erfinder : **Kober, Kurt**
**Am Sandberg 2**
**D-8871 Kötz 1 (DE)**
Erfinder : **Unterstab, Roland**
**Offingerstrasse 23**
**D-8871 Schnuttenbach (DE)**
Erfinder : **Wöhrle, Rudolf, Dipl.-Ing.**
**Kirchstrasse 2**
**D-8873 Ichenhausen-Rieden (DE)**

(74) Vertreter : **Ernicke, Hans-Dieter, Dipl.-Ing.**
**Schwibbogenplatz 2b**
**D-8900 Augsburg (DE)**

EP 0 071 902 B1

## Beschreibung

Die Erfindung bezieht sich auf eine Heimwerkerkreissäge, insbesondere Wippsäge, nach dem Oberbegriff des Anspruchs 1.

An Heimwerkermaschinen werden besondere Anforderungen hinsichtlich Gewicht, Handhabung, Montierbarkeit und Sicherheitsvorrichtungen gestellt. Nicht zu vergessen sind dabei Probleme der Verpackungsgröße und des Korrosionsschutzes. Heimwerkermaschinen dürfen nur wenig Gewicht haben, um leicht von einem Ort zum anderen transportiert werden zu können. Gleichzeitig wird jedoch eine große Standsicherheit in Verbindung mit Schwingungsunempfindlichkeit gefordert. Das schließt mit ein, daß eine solche Maschine möglichst wenig Lärm, wie z. B. Klapper- und Scheppergeräusche, erzeugt.

Heimwerkermaschinen dürfen zudem nur wenig kosten, weshalb vor allem auch die Versand- und Lagerkosten gesenkt werden müssen. Ebenfalls aus Kostengründen sollen Montagearbeiten beim Hersteller so weit als möglich vermieden werden. Problematisch ist in diesem Zusammenhang der geforderte, möglichst billige Korrosionsschutz, der bei Schweißarbeiten eine Nachbehandlung z. B. durch Lackieren nötig macht. Bei Heimwerkermaschinen tritt auch das Problem der Unfallsicherheit auf. Es kann nicht ausgeschlossen werden, daß technische Laien, die nicht über die einschlägigen Sicherheitsbestimmungen Bescheid wissen, mit einem solchen Gerät arbeiten. Bei Kreissägen z. B. passieren jedes Jahr zahlreiche Unfälle, die die Forderung nach « narrensicheren » Maschinen begründen.

Kreissägen und insbesondere Wippsägen sind aus den DE-PS 494 472 und 572 481 sowie den FR-PS 965 169 und 989 220 bekannt. Diese Sägen sind jedoch als Heimwerkersägen ungeeignet, da sie massive, schwere und unhandliche Gestelle aufweisen, die darüber hinaus nicht demontierbar sind.

Die DE-OS 14 53 033 und die US-Re 30 689, hervorgegangen aus der US-PS 4 068 550, offenbaren demgegenüber bereits Kreissägen mit demontierbaren Gestellen, die allerdings nicht die geforderte Schwingungsstabilität aufweisen.

Aus dem DE-GM 18 46 200 ist ein Mehrzweckgerät zum Sägen, Hobeln, Bohren etc. bekannt, das zwar zerlegbar und schwingungsstabil ist, das dafür aber ein aufwendiges Strebenfachwerk mit entsprechendem Platzbedarf und Gewicht benötigt. Diese und einige andere der vorgenannten Kreissägen weisen überdies nicht die für eine Heimwerkermaschine notwendigen Sicherheitsvorrichtungen auf.

Den gestellten Anforderungen wird am ehesten eine Kreissäge nach dem DE-GM 79 19 012 gerecht. Diese Säge ist standfest sowie schwingungsstabil und besitzt die notwendigen Sicherheitsvorrichtungen. Das Gerät ist allerdings nur teilweise demontierbar und besitzt eine erhebliche Verpackungsgröße. Die Stabilität wird nämlich durch ein steifes, geschweißtes Gestell erreicht, das neben der Verpackungsgröße auch einen erheblichen, kostenintensiven Aufwand bei der Vormontage und beim Korrosionsschutz bedingt. Die Demontierbarkeit ist dabei auch nur insoweit gegeben, als die Stützbeine in halber Länge einklappbar sind.

Der Erfindung liegt damit die Aufgabe zugrunde, eine Heimwerkerkreissäge vorzusehen, die die allgemeinen Anforderungen an eine Heimwerkermaschine erfüllt und insbesondere eine stabile, schwingungssteife Konstruktion bei größtmöglicher Demontierbarkeit und kleinster Verpackungsgröße aufweist.

Ausgehend von der Kreissäge nach dem DE-GM 79 19 012 wird die Aufgabe durch die Merkmale im Kennzeichen des Hauptanspruches gelöst.

Durch diese Form des Gestellaufbaus ergibt sich trotz der Verwendung dünner, gebogener Bleche eine standfeste und schwingungsstabile Konstruktion. Der Winkel, in dem die Schenkel der Stützbeinprofile zueinander stehen, entspricht dem Raumwinkel, den die aneinanderstoßenden Konsolenwände miteinander bilden. Diese aneinanderstoßenden Konsolenwände sind nicht direkt miteinander, z. B. über eine Schweißnaht, verbunden. Sie erhalten ihren stabilisierenden Verbund durch das Anschrauben zweier Stützbeine vorzugsweise an die Innenseite der von den Konsolenwänden gebildeten Ecken.

Die vorgegebenen Biegewinkel von Blechprofilen können in der Praxis nie exakt eingehalten werden. Da die Stützbeine unter flächiger Anlage an die eckenbildenden Konsolenwände geschraubt werden und die Winkel nie ganz exakt übereinstimmen, müssen sich diese Teile, um zur Anlage zu kommen, etwas verformen, wodurch ein vorgespannter Verbund entsteht, der zur Stabilisierung des Gestells beiträgt. Durch die stumpfwinkelige Abkantung von drei der vier Konsolenwände und die flächige Anlage der Stützbeine in den Konsolenecken ragen die Stützbeine schräg nach unten, was die Standfestigkeit des Gestells erhöht. Zwei der Stützbeine sind nur mit einem Schenkel, der vorzugsweise an der Innenseite zweier Konsolenwände flächig anliegt, mit der Motorkonsole verschraubt. Diese Beine ragen ebenfalls schräg nach außen.

Die vierte, zum Sägeblatt weisende Konsolenwand ist rechtwinkelig nach unten gebogen. An ihr liegt ein Schutzkasten für das Sägeblatt plan an. Dieser Schutzkasten ist einerseits mit besagter Konsolenwand und andererseits an zwei Stützbeinen, vorzugsweise über eine Lagerstrebe verschraubt, die die beiden nur mit einem Schenkel angeschraubten Stützbeine verbindet. Schutzkasten, Motorkonsole und Stützbeine bilden miteinander einen sehr stabilen Gestellverbund nach Art eines Fachwerks, der auch vertikale Schwingungen aufnimmt. Auch die übrigen Stützbeine sind vorzugsweise untereinander und mit den beiden letztgenannten durch Streben verbunden und verschraubt.

Diese Art des Gestellverbundes unter ausschließlicher Verwendung dünner, gebogener Blechprofile ermöglicht eine leichtgewichtige und dabei trotzdem verwindungssteife, standfeste und schwingungsstabile Gestellkonstruktion, die keinerlei Schweißverbindungen, sondern ausschließlich Schraubverbindungen aufweist.

Da keine Schweißarbeiten erforderlich sind, können verzinkte Bleche verwendet werden, was eine sehr kostengünstige Art des Korrosionsschutzes darstellt. Außerdem müssen keinerlei Teile der Maschine mehr beim Hersteller vormontiert werden. Das schließt nicht aus, daß aus Sicherheitsgründen vielleicht doch Motor und Motorkonsole vormontiert zum Kunden gelangen. In jedem Fall ist der Kunde jedoch in der Lage, die Maschine ohne großen Aufwand selbst zusammenzubauen. Genauso leicht kann er sie zum Transport in Teilegruppen zerlegen oder sie auch in dieser Wiese platzsparend zerlegt aufräumen.

Die Stützbeine weisen an ihrem unteren Ende vorzugsweise angeschraubte Fußplatten auf, die ebenfalls ein Stanz- und Biegeteil aus verzinktem Blech sind. Diese Füße besitzen vorzugsweise ausgestanzte und im Neigungswinkel der Stützbeine gegen den Boden hochgebogene Lappen, die sich plan an die Schenkel des Stützbeinprofils anlegen und dort über ebenfalls ausgestanzte Augen mit besagten Schenkeln verschraubt werden. Die Verwendung solcher Fußplatten schließt alle Arten von Füßen oder Beinen ein, wobei auch mehrschenkelige oder sogar gewölbte Beinprofile möglich sind. Entsprechend ändert sich die Form des Stanzschnittes, der die Lappen definiert. Genausowenig ist die Zahl der Lappen, ebenso wie ihre Form dreieckig, vieleckig, oval etc. festgelegt. Für alle Blechteile gilt, daß sie nicht unbedingt gestanzt werden müssen, das Stanzen stellt nur eine billige Art der Herstellung dar, die unter Umständen gleichzeitig mit dem Biegen stattfinden kann. Die Aufgabe des Stanzens kann auch durch elektrochemische Erosion, Trennschweißen etc. gelöst werden.

Der Schutzkasten für das Sägeblatt ist für Leichtbau wegen der starken Schwingungen, die unter anderem durch die Form des Werkzeuges entstehen, nicht ohne weiteres zugänglich. Vor allem, wenn wie in der Erfindung der Schutzkasten aus Kasten und Deckel besteht, ist es schwierig, schwingungserregte Klapper- und Scheppergeräusche zu eliminieren. Dieses Problem wird dadurch gelöst, daß der Schutzkasten an den Seitenwänden vorzugsweise ausgestanzte und herausgebogene Klemmnasen oder Klauen aufweist, wobei die Seitenwände des breiteren Schutzkastendeckels in den Zwischenraum zwischen Klemmnasen und Seitenwand des Schutzkastens greifen. Diese Klemmnasen sind nur noch an einer Seite mit dem Schutzkasten verbunden und können daher auf Druck elastisch etwas nachgeben. Die Seitenwände des Schutzkastendeckels stützen sich an den Klemmnasen ab und werden von diesen zudem seitlich gegen die Seitenwände des Schutzkastens geklemmt. Durch Schrauben wird der Schutzkastendeckel gegen die Klemmnasen gepreßt und da diese elastisch etwas nachgeben, liegen die Seitenwände des Schutzkastendeckels an allen Nasen gleichzeitig an, wobei diese Verbindung von Schutzkasten und Schutzkastendeckel durch die Schrauben etwas vorgespannt werden kann. Damit können sich erstens die Schrauben nicht mehr so leicht lockern, und zweitens werden Relativbewegungen zwischen Schutzkasten und Schutzkastendeckel vermieden, die zu unerwünschten Scheppergeräuschen führen würden. Der Schutzkasten und sein Deckel sind ebenfalls Stanz- und Biegeteile aus verzinktem Blech.

Im Zuge der Heizölverteuerung gehen immer mehr Hausbesitzer, vor allem in ländlichen Bereichen, dazu über, mit Holz zu heizen. Dazu müssen sie von längeren Stangen oder Balken kurze Stücke absägen. Die Heimwerkerkreissäge ist zu diesem Zeck vorzugsweise als Wippsäge mit besonders geformter Aufnahmewanne für das Sägegut ausgeführt. Die Aufnahmewanne weist im Prinzip die Form eines U auf, wobei der dem Sägeblatt benachbarte U-Schenkel der Aufnahmewanne ungefähr in halber Höhe zum Sägeblatt hin abgebogen ist. Diese Form der Aufnahmewanne hat gegenüber einer normalen U- oder V-Form den Vorteil, daß bereits in geringer Höhe über dem waagerechten Steg des gekröpften U eine größe Öffnungsweite besteht. Das bedeutet, daß dicke Balken, die z. B. in einer V-Form wegen der nur allmählich anwachsenden Öffnungsweite hoch über der Spitze des V liegen, damit unter Beachtung vernünftiger Schwenkwinkel der Wippe nicht mehr in den Schnittbereich des Sägeblattes gelangen. Bei der erfindungsgemäßen Wannenform ermöglicht die gekröpfte U-Form eine tiefe Lage solch eines dicken Balkens, der somit, wenn auch nicht in einem Schnitt, so doch in mehreren Schnitten durchgesägt werden kann. Dabei muß der Balken nach jeder Zuführbewegung etwas weiter gedreht werden, da das Sägeblatt nur einen Sektor, der jedoch über die Mittelachse des Balkens reicht, heraussägt. Eine entsprechend weit öffnende V-Form erfüllt nicht den gleichen Zweck, weil der in diesem Fall flach verlaufende sägeblattseitige Schenkel nach kurzem Schwenkweg auf dem Motor bzw. dem Gestell auftreffen würde. Der flache obere Teil des gekröpften U-Schenkels liegt dahingegen höher und erlaubt größere Schwenkwinkel der Wippe. Mit dieser Form der Aufnahmewanne können Balken bis zu einer Dicke von ca. 15 cm in einem Schnitt durchgesägt werden.

Heimwerkermaschinen erfordern, wie schon erwähnt, erhöhte Unfallschutzmaßnahmen. Dazu gehört die Forderung, daß z. B. im Falle einer Wippsäge das Sägeblatt möglichst immer abgedeckt ist. Diese Aufgabe wird durch eine Sicherheitsvorrichtung gelöst, die die Wippe stets in ihre Ruhestellung zurückzuschwenken trachtet. An der Wippe ist eine Steuerstange schwenkbar befestigt, deren Gegenlage eine U-förmige Klemmfeder bildet. Diese Klemmfeder steckt in einer Öffnung der Motorkonsole normalerweise unverrückbar fest. Die Steuerstange passiert die Klemmfeder durch eine Öffnung im Quersteg von deren U-Profil. Hinter der Klemmfeder im Inneren der Motorkonsole sitzen eine große Scheibe und eine Mutter auf der Steuerstange, wobei die Mutter ein Widerlager für die Scheibe bildet. Vor der Klemmfeder ist auf der Steuerstange eine Druckfeder geführt, die sich einerseits an der Klemmfeder und andererseits an einer ebenfalls auf der Steuerstange geführten Scheibe abstützt. Wird durch eine Schwenkbewegung der Wippe Sägegut zugeführt, wandert auch die Steuerstange in Richtung Sägeblatt bzw. Motorkonsole durch die Bohrung in der Klemmfeder. Dadurch wird die Druckfeder gespannt und schwenkt beim Loslassen der Wippe diese selbsttätig in ihre Ruhe- oder Ausgangsposition, wo das Sägeblatt nach allen Seiten hin gegen Zugang gesichert ist. Ohne diese Sicherheitsvorrichtung würde die Wippe durch ihr Eigengewicht zum Sägeblatt hinkippen, das dann im Falle einer leeren Aufnahmewanne offen in diese Wanne ragen würde.

Die Klemmfeder besitzt Taillierungen, mit denen sie in der Konsolenwand einrastet. Zum Wechseln des Sägeblatts muß die Wippe etwas über die Ruhestellung hinaus nach hinten geschwenkt werden, damit die an der Aufnahmewanne befestigten Abdeckschürzen das Sägeblatt freigeben. Zu diesem Zweck kann man die Klemmfeder ausrasten, wodurch die Wippe mit der Steuerstange nach rückwärts schwenken kann, jedoch nur so weit, bis die besagte große Scheibe, die die Öffnung in der Motorkonsole nicht passieren kann, an der Konsolenwand anliegt, und über die besagte Mutter die Steuerstange und damit die Wippe zurückhält. Beim Zurückschwenken schiebt die Druckfeder die Klemmfeder zurück in die Konsolenwand, wo sie selbsttätig wieder einrastet. Das hat den Vorteil, daß die Sicherheitsvorrichtung nicht unbeabsichtigt oder fahrlässig außer Betrieb gesetzt werden kann.

Des weiteren ist ein oberer Blattschutz für das Sägeblatt vorgesehen, der schwenkbar am Schutzkasten befestigt ist. Dieser Blattschutz weist an seinem wippenseitigen Ende ein vorzugsweise gebogenes Gleitblech auf. Außerdem ist eine Rückholfeder für den oberen Blattschutz vorgesehen. Beim Sägen von dicken Balken drücken diese das Gleitblech und damit den oberen Blattschutz gegen die Kraft der Rückholfeder nach oben. Schwenkt die Wippe wieder zurück, zieht die Rückholfeder den oberen Blattschutz zurück in seine Ruheposition. Damit ist auch beim Sägen von dicken Balken, die bedingt durch die zuführende Schwenkbewegung mehr von oben her auf das Sägeblatt treffen, die vollständige Abdeckung des Sägeblattes nach oben gewährleistet.

Aus Gründen der Kostenersparnis und des Korrosionsschutzes sind auch vorzugsweise alle Teile der Wippe-, Stanz- und Biegeteile aus verzinktem Blech.

Einzelheiten der Erfindung ergeben sich aus den Zeichnungen. In ihnen ist die Erfindung in einer Ausführungsform als Wippsäge schematisch und beispielsweise dargestellt. Es zeigen:

Figur 1 eine Seitenansicht einer Wippsäge, bei der zur besseren Übersichtlichkeit die Schutzverkleidungen für das Sägeblatt nicht dargestellt ist,

Figur 2 eine Ansicht der gegenüberliegenden Seite der Wippsäge mit einem eingelegten dicken Balken,

Figur 3 eine Ansicht gemäß Pfeil A von Figur 1, ohne Darstellung der Wippe,

Figur 4 eine Draufsicht auf den Stanzschnitt einer Fußplatte,

Figur 5 eine geschnittene Seitenansicht einer Fußplatte gemäß Figur 4, die an einem Stützbein angeschraubt ist,

Figur 6 eine perspektivische Ansicht der Wippe mit einer Aufnahmewanne,

Figur 7 einen Querschnitt durch einen Schutzkasten für das Sägeblatt,

Figur 8 eine Seitenansicht einer Sicherheitsvorrichtung, teilweise im Schnitt, unter Weglassen der für die Konstruktion unwichtigen Teile und

Figur 9 eine perspektivische Ansicht einer Klemmfeder.

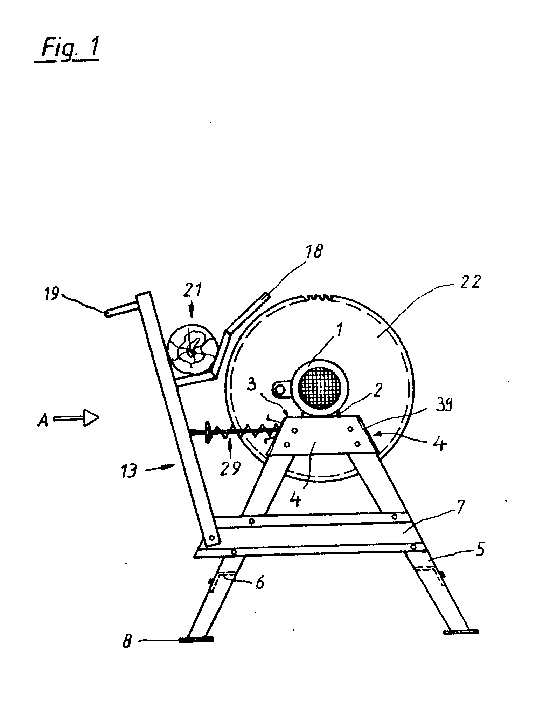

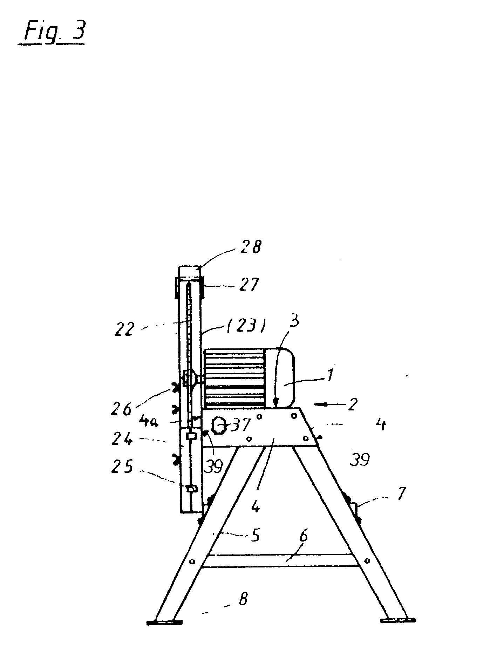

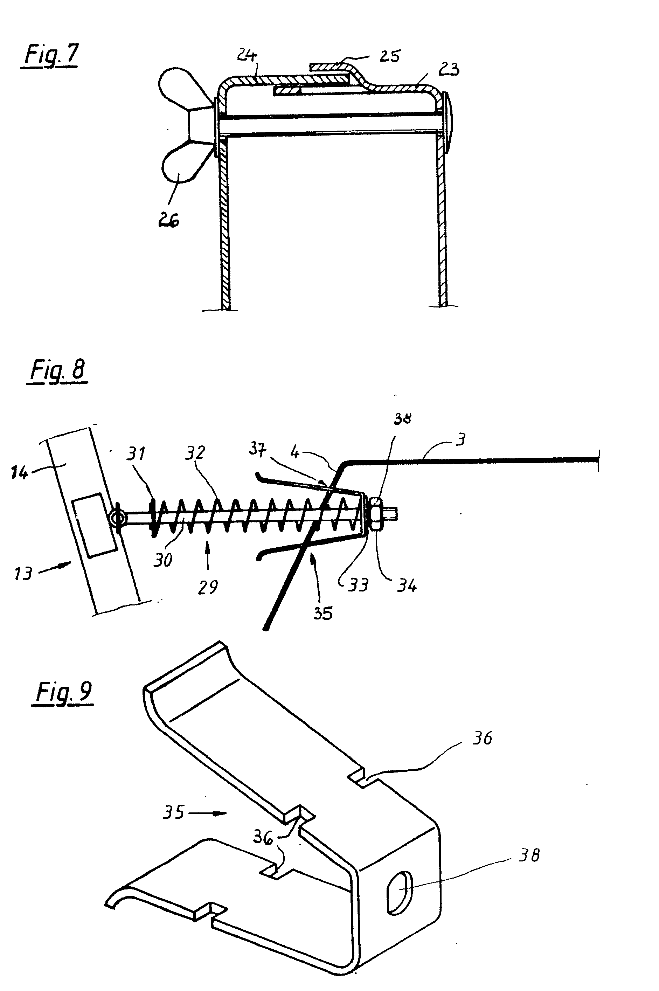

Figur 1 zeigt eine Seitenansicht einer Wippsäge, bei der zur besseren Übersichtlichkeit die Schutzverkleidungen für das Sägeblatt 22 nicht dargestellt sind. Ein Motor 1 treibt über seinen Wellenstummel direkt ein rundes Sägeblatt 22 an. Vorzugsweise kommt ein Elektromotor für 220 Volt Wechselstrom zur Anwendung. Der Motor 1 ist auf einer haubenartigen Motorkonsole 2 festgeschraubt, die aus einer verzinkten Blechplatte mit allseits nach unten gebogenen Rändern besteht. Der mittlere, waagerechte Teil der Blechplatte bildet den Konsolenboden 3 und die umgebogenen Ränder die Konsolenwände 4, 4a, die mit ihren seitlichen Kanten 39 nur lose aneinanderstoßen und nicht direkt, z. B. durch eine Schweißnaht, miteinander verbunden sind. Wie in Figur 3 gezeigt, wird die Konsolenwand 4a, an der der Schutzkasten 23 für das Sägeblatt 22 plan anliegt, vom Konsolenboden 3 aus senkrecht nach unten gebogen. Die übrigen Konsolenwände 4 schließen, wie in Figur 8 dargestellt, mit dem Konsolenboden 3, einen Winkel von vorzugsweise mehr als 90° ein.

Die Motorkonsole 2 ruht auf Stützbeinen 5 aus verzinktem Stahlblech, mit dem sie verschraubt ist. Die Stützbeine 5 sind im Querschnittprofil L-förmig und besitzen eine in Längsrichtung sich von oben nach unten keilförmig verjüngende Kontur. Vorzugsweise haben die Stützbeine 5 auch eingeprägte, die Stabilität erhöhende Sicken.

Figur 3 zeigt die Zuordnung der Stützbeine 5 zur Motorkonsole 2. Die beiden, dem Sägeblatt 22 benachbarten Stützbeine 5 liegen mit einem ihrer L-Schenkel flächig an der Innenseite je einer Konsolenwand 4 an und sind mit dieser verschraubt. Die Befestigungspunkte befinden sich ungefähr auf halber Länge der Konsolenwände 4. Die beiden anderen Stützbeine 5 sind auf der Innenseite der dem Sägeblatt 22 abgewandten Foken der Motorkonsole 2 angeschraubt. Der Winkel, in dem die L-Schenkel der Stützbeine 5 zueinander stehen, entspricht dem Raumwinkel, den die beiden Ecken bildenden Konsolenwände 4 miteinander einschließen. Aus diesem Grund schmiegen sich die Stützbeine 5 flächig an die Innenseiten der Konsolenwände 4. Da der Winkel zwischen dem Konsolenboden 3 und den drei Konsolenwänden 4 vorzugsweise größer als 90° ist, erstrecken sich die Stützbeine 5, die durch ihre flächige Anlage eine Verlängerung der Konsolenwände 4 bilden, schräg nach außen.

Die Stützbeine 5 sind mit ihren Nachbarbeinen durch Streben 6 bzw. Lagerstreben 7 verbunden und verschraubt. Diese profilierten Streben 6, 7 werden ebenfalls aus verzinkten Blechen gestanzt und gebogen.

An jedes Stützbein 5 ist eine Fußplatte 8 angepaßt und angeschraubt. Diese Fußplatte 8 ist ebenfalls ein Stanz- und Biegeteil aus verzinktem Blech.

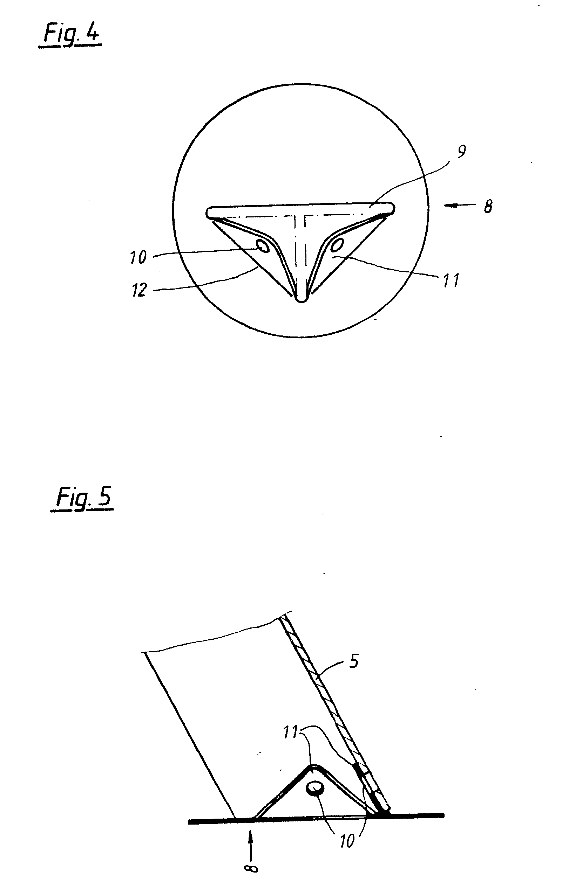

Figur 4 zeigt den Stanzschnitt für eine Fußplatte 8. Die Fußplatte 8 weist einen T-förmigen Trennschnitt 9 und zwei oder auch mehr Augen 10 auf. Der T-Schnitt 9 formt in Verbindung mit den beiden gestrichelten Biegelinien 12 zwei dreieckige Lappen 11, die nach dem Stanzen entlang der Biegelinien 12 schräg nach oben gebogen werden. Der Winkel zwischen den Lappen 11 und der waagerechten Fußplatte 8 ist gleich groß wie der Winkel, den das schräg nach außen verlaufende Stützbein 5 mit der Horizontalen einschließt.

Figur 5 verdeutlicht, daß das an seinem unteren Ende entsprechend schräg abgeschnittene Stützbein 5 flächig auf der Bodenplatte 8 aufsteht und daß durch die gleichen Winkel die Lappen 11 sich plan an die Innenseiten der Schenkel des Stützbeines 5 anlegen. Beim Biegen bleibt die runde Form der Augen 10 erhalten, so daß die Lappen 11 darüber exakt mit den Schenkeln der Stützbeine 5 verschraubt werden können. Durch diese Konstruktion werden die Verbindungsschrauben nur auf Zug und nicht auf Schub beansprucht, da die schuberzeugenden Auflagekräfte direkt von der Platte 8 auf die Stützbeine 5 geleitet werden und nur die zug- oder druckerzeugenden Seitenführungskräfte von den Lappen 11 über die Verbindungsschrauben auf die Schenkel der Stützbeine 5 geleitet werden.

Wie aus Figur 3 zu entnehmen, wird der Schutzkasten 23 mit der Motorkonsole 2 und einer Lagerstrebe 7 verschraubt.

Der Schutzkasten 23 weist an seinen beiden Seitenwänden ausgestanzte und herausgebogene Klemmnasen 25 auf. Der Schutzkastendeckel 24 ist etwas breiter als der Schutzkasten 23, so daß man ihn über den Schutzkasten 23 schieben kann. Dabei greifen die Ränder der Seitenwände des Schutzkastendeckels 24 in den Zwischenraum zwischen den Klemmnasen 25 und den Seitenwänden des Schutzkastens 23.

In Figur 7 ist diese Eingriffsstellung im Querschnitt dargestellt. Mittels Schrauben und Flügelmuttern 26 wird der Schutzkastendeckel 24 gegen die Klemmnasen 25 des Schutzkastens 23 gepreßt. Da die Klemmnasen 25 auf Druck elastisch etwas nachgeben, stützt sich der Schutzkastendeckel 24 gleichzeitig an allen Nasen ab. Diese Verbindung wird durch die vorhin genannten Schrauben vorgespannt und kann dadurch auch bei starken Schwingungen keine Klappergerdusche erzeugen. Der Zwischenraum zwischen den Klemmnasen 25 und den Seitenwänden des Schutzkastens 23 ist so eng bemessen, daß die Seitenwände des Schutzkastendeckels darin eingeklemmt werden und somit auch zur Seite keine Bewegungsfreiheit haben.

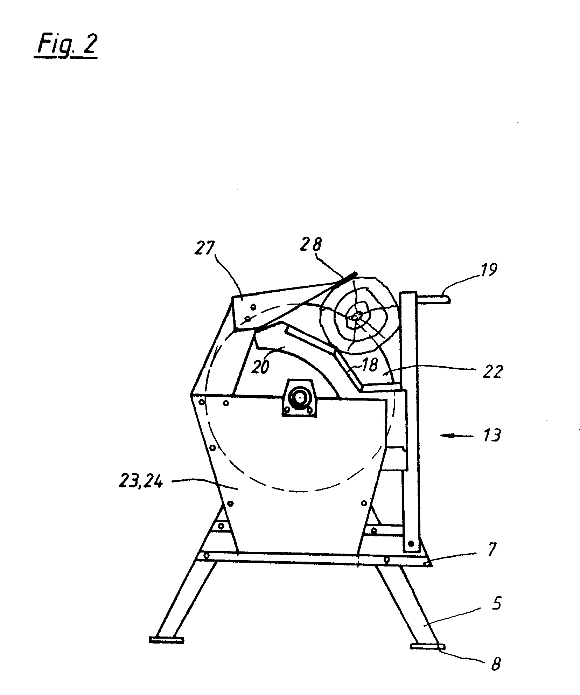

Wie aus den Figuren 1 und 2 ersichtlich, ist die Zuführvorrichtung für das Sägegut in Form einer Wippe 13 ausgebildet, die an den beiden Lagerstreben 7 schwenkbar angelenkt ist.

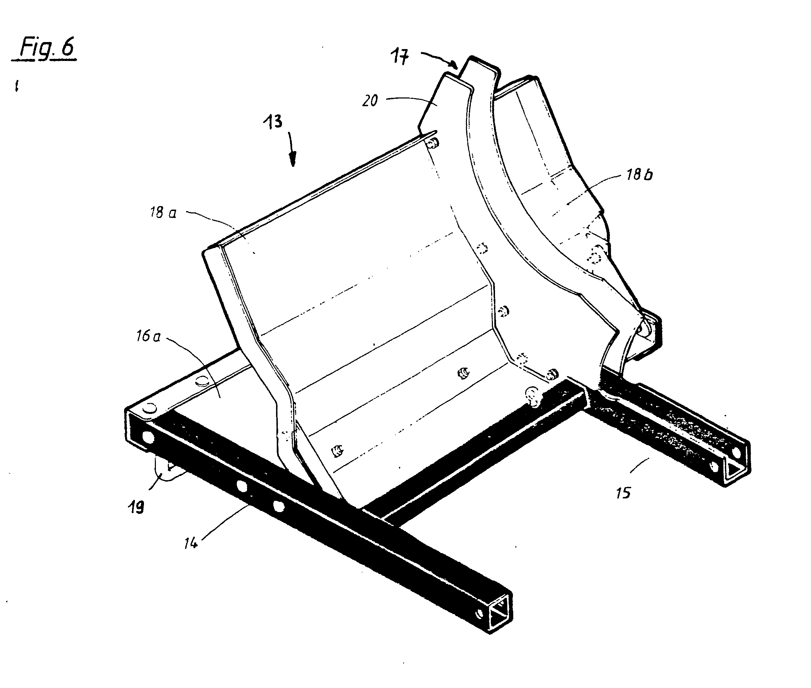

Figur 6 zeigt eine perspektivische Ansicht der Wippe 13, die aus zwei, zum Sägeblatt 22 hin offenen U-Profilen 14, 15 besteht, die an ihren oberen Enden durch den breiten Teil 16a eines Rückhaltebleches 16 miteinander verbunden sind. Auf der anderen Seite des U-Profils 15 ist fluchtend zum breiten Teil 16a ein schmaler Teil 16b des Rückhaltebleches 16 befestigt. Zwischen den beiden U-Profilen 14, 15 ist auch der breite Teil 18a des Sägetisches 18 befestigt, der ebenfalls auf der anderen Seite des U-Profils 15 einen schmalen Teil 18b aufweist. Zwischen den beiden Teilen 18a und 18b des Sägetisches 18 entsteht damit ein Spalt 17 von der Breite des U-Profiles 15. Beim Zuführen des Sägeguts wird die Wippe 13 geschwenkt und das Sägeblatt 22 passiert diesen Spalt 17. Beidseits des Spaltes 17 sind am breiten Teil 18a und am schmalen Teil 18b des Sägetisches 18 Abdeckschürzen 20 angebracht. Die Abdeckschürzen 20 und das zum Sägeblatt 22 hin offene U-Profil 15 bilden somit einen Schacht, durch den die Sägespäne nach unten abgeführt werden. Das U-Profil 15 fungiert beim Sägen auch als wippenseitige Sägeblattabdeckung.

Der Sägetisch 18 bildet zusammen mit dem Rückhalteblech 16 eine Wanne 21 zur Aufnahme des Sägegutes. Diese Wanne 21 weist, wie in Figur 1 dargestellt, eine besondere Form auf. Sie entspricht im Querschnitt etwa einem U, wobei der dem Sägeblatt 22 nächstliegende Schenkel des U im oberen Teil zum Sägeblatt 22 abgewinkelt ist. Den Steg und den gekröpften Schenkel des U bildet dabei vorzugsweise der Sägetisch 18. Diese Form der Aufnahmewanne 21 hat den Vorteil, daß wie in Figur 1 gezeigt, Balken oder Stangen bis zu einem Durchmesser von ca. 15 cm im unteren Teil der U-förmigen Aufnahmewanne 21 lagern und in einem Schnitt durchgesägt werden können. Andererseits wird durch die gekröpfte U-Form die Öffnungsweite der Aufnahmewanne 21 so vergrößert, daß auch sehr dicke Balken relativ tief in der Aufnahmewanne 21 zu liegen kommen. Durch die tiefe Lage in der Aufnahmewanne 21 reicht auch bei dicken Balken der Schnitt des Sägeblattes 22 bis über die Mittellinie des Balkens. Will man keine so dicke Balken sägen, kann man wegen der vorteilhaften Form der Aufnahmewanne 21 stattdessen den Durchmesser des Sägeblattes 22 verkleinern. Die Verkleinerung des Sägeblattes 22 erlaubt die Verwendung eines relativ leistungsschwachen Elektromotors, der an 220 Volt Wechselstrom angeschlossen werden kann.

Am oberen Teil der Wippe 13 ist ein Handgriff 19 befestigt. Fast alle Teile der Wippe 13 sind Stanz- und Biegeteile aus verzinktem Blech, die ausschließlich durch Schrauben miteinander verbunden werden.

Wie schon erwähnt, wird beim Zuführen das Sägegut zum ortsfest gelagerten, rotierenden Sägeblatt 22 geschwenkt. Um auch dicke Balken sägen zu können und gleichzeitig das Rotieren des Sägeblattes 22 nach oben hin abzudecken, ist gem. Fig. 2 ein oberer Blattschutz 27 vorgesehen, der an seiner Vorderseite ein vorzugsweise gebogenes Gleitblech 28 aufweist und der an seiner Rückseite am Schutzkasten 23 schwenkbar befestigt ist. Wird auf der Wippe 13 ein dicker Balken zugeführt, drückt dieser das Gleitblech 28 und damit den oberen Blattschutz 27 nach oben weg. Dies geschieht gegen die Kraft einer nicht dargestellten Feder, die den oberen Blattschutz 27 selbsttätig in seine Ruheposition zurückholt.

In Figur 1 ist eine Sicherheitsvorrichtung 29 angedeutet, die die Wippe 13 aus jeder Zuführstellung in die Ausgangs- oder Ruheposition zurückschwenkt. In Fig. 8 und 9 ist die Sicherheitsvorrichtung 29 im einzelnen schematisch dargestellt. Sie besteht aus einer Steuerstange 30, die an der Wippe 13 schwenkbar befestigt ist. Auf der Steuerstange 30 ist eine Druckfeder 32 geführt, die sich einerseits an einer Scheibe 31 und andererseits an einem Bügel 35 in Form einer Klemmfeder abstützt, die in der Konsolenwand 4 ortsfest gelagert ist. Die Steuerstange 30 passiert die Klemmfeder 35 durch eine Bohrung 38 (vgl. Fig. 9) und weist dahinter noch eine große Scheibe 33 und eine Mutter 34 auf. Bei einer Schwenkbewegung der Wippe 13 wird die Steuerstange 30 durch die Öffnung 38 in der Klemmfeder 35 geschoben, wodurch die Druckfeder 32 gespannt wird und rückstellende Federkräfte entwickelt.

Ohne Sicherheitsvorrichtung 29 würde die Wippe 13 in ihrer Ruhestellung durch ihr Eigengewicht nach unten kippen. Das wird durch die Steuerstange 30 verhindert, die sich über die aufgeschraubte Mutter 34 und die Scheibe 33 an der Klemmfeder 35 abstützt, die wiederum normalerweise unverrückbar in der Konsolenwand 4 steckt.

Figur 9 zeigt eine perspektivische Ansicht dieser Klemmfeder 35. Es handelt sich dabei um ein gestanztes, gebogenes und verzinktes Blechteil in der Art eines U-förmigen Bügels. Auf den beiden Schenkeln der Klemmfeder 35 sind in unterschiedlicher Entfernung vom Quersteg Taillierungen 36 angebracht, die zur Befestigung der Klemmfeder in der Konsolenwand 4 dienen. Der Steg der U-förmigen Klemmfeder 35 ist noch mit einer Bohrung 38 versehen, durch die die Steuerstange 30 ragt. Figur 3 zeigt in der zum Betrachter weisenden Konsolenwand 4 eine Öffnung 37. In diese kreuzförmige Öffnung 37 wird die Klemmfeder 35 gesteckt. Die normale Bügelbreite der Klemmfeder 35 entspricht der maximalen Breite der kreuzförmigen Öffnung 37, wohingegen die Bügelbreite der Klemmfeder 35 in Höhe der Taillierungen 36 der Breite der senkrechten Schenkel der kreuzförmigen Öffnung 37 entspricht. Die Öffnungsweite der Klemmfeder 35, gemessen zwischen den beiden Taillierungen 36, ist größer als die Höhe der senkrechten Kreuzschenkel der Öffnung 37. Zum Einsetzen der Klemmfeder in die Öffnung 37 muß die U-förmige Klemmfeder 35 an ihren freien Enden zusammengedrückt werden. Beim Loslassen der freien Enden spreizt sich die Klemmfeder 35 wieder auf. Befinden sich nun die Taillierungen 36 genau in Höhe der Konsolenwand 4, drückt sich die Federklemme 35 mit diesen schmalen Taillierungen 36 in die schmalen senkrechten Stege der kreuzförmigen Öffnung 37. Die Dicke der Taillierungen 36 entspricht dabei der Wandstärke der Konsolenwand 4. In dieser sog. Raststellung ist die Klemmfeder 35 unverrückbar in der Öffnung 37 festgeklemmt, da sie vor und hinter der Taillierung 36 ihre volle Bügelbreite wieder aufweist und an diesen Stellen an der Innen- und Außenseite der Konsolenwand 4 anliegt. Die Konsolenwand 4 greift also wie eine Verzahnung in die Taillierungen 36 der Klemmfeder 35.

Beim Schwenken der Wippe 13 bewegen sich die angeschlossene Steuerstange 30 hauptsächlich in horizontaler Richtung, weshalb auch die Klemmfeder 35 waagerecht in die Motorkonsole 2 gesteckt werden muß. Da jedoch die Konsolenwand 4 schräg nach unten verläuft (vgl. Figur 8), müssen die Taillierungen 36, wenn die Klemmfeder 35 horizontal in die Konsolenwand 4 gesteckt werden soll, gegeneinander versetzt sein, wie das aus Figur 9 ersichtlich ist.

Der Schwenkweg der Wippe 13 nach rückwärts ist, wie schon erwähnt, beschränkt. Zum Wechseln des Sägeblattes 22 müssen jedoch die an den Teilen 18a und 18b des Sägetisches 18 befestigten Abdeckschürzen 20 (vgl. Figur 2) wenigstens teilweise entfernt werden. Zu diesem Zweck muß man die Wippe 13 über ihre Ruhestellung hinaus nach rückwärts verschwenken. Durch Zusammendrücken der freien Enden der Klemmfeder 35 geraten die Taillierungen 36 außer Eingriff mit den senkrechten Schenkeln der Öffnung 37, so daß nun die Klemmfeder 35 und mit ihr die Steuerstange 30 aus der Motorkonsole 2 herausgezogen werden können. Der Auszug wird jedoch durch die Scheibe 33 beschränkt, die so groß ist, daß sie die Öffnung 37 in der Konsolenwand 4 nicht passieren kann. Kommt sie zur Anlage an die Konsolenwand 4, hält sie über die Mutter 34 die Steuerstange 30 zurück. Schwenkt man die Wippe 30 wieder vorwärts in Richtung Sägeblatt 22 schiebt die Druckfeder 32 die Klemmfeder 35 in deren Raststellung in der Motorkonsole 2 zurück. Dadurch kann die Sicherheitsvorrichtung 29 nicht versehentlich außer Betrieb gesetzt werden.

Stückliste

1 Motor
2 Motorkonsole
3 Konsolenboden
4 stumpfwinkelig abgebogene Konsolenwände
4a rechtwinkelig abgebogene Konsolenwand
5 Stützbein
6 Strebe
7 Lagerstrebe
8 Fußplatte
9 T-förmiger Trennschnitt
10 Auge
11 Lappen
12 Biegelinie
13 Wippe
14 U-Profil links
15 U-Profil rechts
16 Rückhalteblech
16a breiter Teil des Rückhalteblechs
16b schmaler Teil des Rückhalteblechs
17 Spalt
18 Sägetisch
18a breiter Teil des Sägetisches
18b schmaler Teil des Sägetisches
19 Handgriff
20 Abdeckschürze
21 Aufnahmewanne
22 Sägeblatt
23 Schutzkasten
24 Schutzkastendeckel
25 Klemmnase
26 Schraube + Mutter
27 oberer Blattschutz
28 Gleitblech
29 Sicherheitsvorrichtung
30 Steuerstange
31 Scheibe
32 Druckfeder
33 Scheibe
34 Mutter
35 Klemmfeder
36 Taillierung
37 kreuzförmige Öffnung
38 Bohrung
39 seitliche Kante

**Patentansprüche**

1. Heimwerkerkreissäge, vorzugsweise Wippsäge, bestehend aus einer Motorkonsole (2), einem Schutzkasten (23) mit Abdeckung für das Sägeblatt (22) aus schräg ausgestellten, aus L-Profilen gebildeten und keilförmig sich von oben nach unter verjüngenden Stützbeinen (5) sowie Streben (6), die zusammen ein Gestell bilden und miteinander verschraubt sind, dadurch gekennzeichnet, daß die Motorkonsole (2) als haubenartiges Blechgehäuse ausgebildet ist mit drei vom Konsolenboden (3) schräg auswärts abgebogenen Konsolenwänden (4) und einer rechtwinkelig abgebogenen Konsolenwand (4a), wobei die Konsolenwände (4, 4a) mit ihren Rändern in den Konsolenecken nur lose aneinanderstoßen, daß zwei Stützbeine (5) unter flächiger Anlage ihrer beiden Schenkel in die Ecken der Motorkonsole (2) und zwei Stützbeine (5) unter flächiger Anlage nur eines L-Schenkels schräg an zwei gegenüberliegenden Konsolenwänden (4) mit Distanz zu den Konsolenecken geschraubt sind und daß der Schutzkasten (23) an der rechtwinklig abgebogenen Konsolenwand (4a) und an den letztgenannten Stützbeinen (5) direkt oder über eine Lagerstrebe (7) angeschraubt ist.

2. Heimwerkerkreissäge nach Anspruch 1, mit an den Stützbeinen befindlichen Fußplatten, dadurch gekennzeichnet, daß die Fußplatte (8) durch Stanzen und Abkanten gebildete Lappen (11) mit Augen (10) als Flanschteile zur Schraubverbindung mit den Stützfüßen (5) aufweisen, deren Neigung gegenüber der Fußplatte (8) der Schrägstellung der Stützbeine (5) entspricht.

3. Heimwerkerkreissäge nach Anspruch 1, dadurch gekennzeichnet, daß der Schutzkasten (23) zweiteilig ausgebildet ist und daß an den Seitenwänden des Schutzkastens (28) Klemmnasen (25) ausgestanzt und abgebogen sind, wobei die Seitenwände des Schutzkastendeckels (24) mit ihren Rändern in den Zwischenraum zwischen den Klemmnasen (25) und den Seitenwänden des Schutzkastens (23) greifen und eine durch Schrauben verspannte Verbindung von Schutzkasten (23) und Schutzkastendeckel (24) vorgesehen ist.

4. Heimwerkerkreissäge nach Anspruch 1, mit einer schwenkbar gelagerten, im Querschnitt etwa U-förmigen Aufnahmewanne (21) für Sägegut zur Ausbildung einer Wippsäge, dadurch gekennzeichnet, daß der dem Sägeblatt (22) zugekehrte Schenkel der Aufnahmewanne (21) ungefähr in halber Höhe in Richtung zum Sägeblatt (22) abgewinkelt ist.

5. Heimwerkerkreissäge nach Anspruch 1 oder 4, mit einer Anordnung zum Rückstellen (29) einer die Aufnahmewanne tragenden Wippe (13), dadurch gekennzeichnet, daß die Abstützung der Rückstellanordnung aus einer das Sägeblatt freigebenden Stellung in eine das Sägeblatt beim Sägebetrieb mindestens teilweise geschützt haltenden Stellung verstellbar ist.

6. Heimwerkerkreissäge nach Anspruch 5, dadurch gekennzeichnet, daß die Wippe (13) mit mindestens einer Steuerstange (30) federnd an einem U-förmigen Bügel (35) abgestützt ist, dessen Schenkel federnd gestaltet und mit einer Taillierung (36) versehen sind, die in eine kreuzförmige Aussparung (37) einer Konsolenwand (4) einrastet.

7. Heimwerkerkreissäge nach Anspruch 4 oder einem der folgenden, dadurch gekennzeichnet, daß am Schutzkasten (23) schwenkbar ein oberer Blattschutz (27) mit einer Rückholfeder und einem zur Wippe (13) weisenden, vorzugsweise gebogenen Gleitblech (28) angeordnet ist.

8. Heimwerkerkreissäge nach Anspruch 1 oder einem der folgenden, dadurch gekennzeichnet, daß alle Teile des Gestells und der Wippe (13) als Stanz- und Biegeteile aus verzinktem Blech ausgeführt und ausschließlich durch Schrauben miteinander verbunden sind.

**Claims**

1. Do it yourself circular saw, more particularly a tilting circular saw, comprising a motor mounting bracket (2), a protective box (23) with a cover for the saw blade (22), supporting legs (5) which become narrower towards the bottom in the manner of a wedge, which are formed from L-sections and which are arranged in an inclined manner and cross braces (7), which together form a frame and are screwed to one another, characterised in that the motor mounting bracket (2) is designed as a dome-like sheet-metal housing with three mounting bracket walls (4) which are bent outwards at an angle from the mounting bracket base (3) and one mounting bracket wall (4a) which is bent at right angles, the edges of the mounting bracket walls (4, 4a) only loosely abutting at the mounting bracket corners, two supporting legs are screwed into the corners of the motor mounting bracket (2) with a flat abutment of both of their leg parts, and two supporting legs (5) are screwed with a flat abutment of only one L-shaped leg part at an angle onto two oppositely disposed mounting bracket walls (4), at a distance from the mounting bracket corners, and the protective box (23) is screwed directly or via a supporting strut (7) onto the mounting bracket wall (4a), which is bent at right angles, and onto the last-mentioned supporting legs (5).

2. Do it yourself circular saw according to claim 1, having base plates arranged on the supporting legs, characterised in that the base plate (8) comprises lugs (11), which are formed by punching and chamfering and have eyes (10), as flange parts for a screw connection with the supporting feet (5), the inclination of the lugs with respect to the base plate (8) corresponding to the inclined position of the supporting legs (5).

3. Do it yourself circular saw according to claim 1, characterised in that the protective box is formed in two parts and on the lateral walls of the protective box (23) clamping noses (25) are punched out and bent away, the edges of the lateral walls of the cover (24) of the protective box penetrating the space between the clamping noses (25) and the lateral walls of the protective box (23), and a connection which is tensioned by a screw is provided between the protective box (23) and the cover (24) of the protective box (23).

4. Do it yourself circular saw according to claim 1, having a receiving trough (3), which is pivotably mounted and which is approximately U-shaped in cross-section for sawing material, so as to form a tilting circular saw, characterised in that the leg of the receiving trough (21) facing the saw blade (22) is bent approximately halfway along in the direction towards the saw blade (22).

5. Do it yourself circular saw according to claim 1 or 4, having an arrangement (29) for resetting a tilting table (13) which supports the receiving trough, characterised in that the support of the resetting arrangement can be adjusted from a position in which the saw blade is released, into a position in which the saw blade is held at least in a partially protected manner during operation of the saw.

6. Do it yourself circular saw according to claim 5, characterised in that the tilting table (13) is supported via at least one push and pull rod (30) in a resilient manner on a U-shaped clamping bracket (35), the legs of which are resiliently formed and provided with a narrow portion (36), which rests in a cross-shaped opening in a mounting bracket wall (4).

7. Do it yourself circular saw according to claim 4 or any one of the following claims, characterised in that an upper blade protector (27) having a return spring and a slide plate (28), which points in the direction of the tilting table (13) and is preferably curved, is pivotably mounted on the protective box (23).

8. Do it yourself circular saw according to claim 1 or any one of the following claims, characterised in that all parts of the frame and the tilting table (13) are formed as parts which are punched and bent from galvanised sheet metal and which are connected to one another exclusively by means of screws.

**Revendications**

1. Scie circulaire pour bricoleur, notamment scie basculante, constituée par une console (2) pour un moteur, un carter de protection (23) muni d'un couvercle pour la lame de scie (22), et par des pieds (5) disposés obliquement, formés par des profilés en L et possédant une forme en coin se rétrécissant du haut vers le bas, ainsi que des traverses (4) qui forment ensemble un bâti et sont reliées entre elles par vissage, caractérisée par le fait que la console (2) du moteur est réalisée sous la forme d'un boîtier en tôle en forme de capot, comportant trois parois (4) repliées obliquement vers l'extérieur à partir de la base (3) de la console, et une paroi (4a) coudée à angle droit, les parois (4, 4a) de la console étant disposées en aboutement seulement de façon lâche, par leurs bords au niveau des angles de la console, et que deux pieds (5) sont fixés par vissage à deux parois opposées (4) de la console moyennant l'application, sur une certaine surface, de leurs deux ailes dans les angles de la console (2) du moteur et que deux pieds (5) sont fixés par vissage à deux parois opposées (4) de la console, à distance des angles de cette dernière, moyennant l'application, sur une certaine surface, de seulement une aile du profilé en L obliquement contre lesdites parois, et que le carter de protection (23) est vissé sur la paroi (4a) de la console, qui est coudée à angle droit, et sur les pieds (5) indiqués en dernier, ou bien directement sur une traverse de support (7).

2. Scie circulaire pour bricoleur suivant la revendication 1, comportant des patins situés sur les pieds de support, caractérisée par le fait que les patins (8) comportent des languettes (11) formées par découpage et pliage à arêtes vives et comportant des œillets (10) et servant d'élément de brides pour la fixation par vissage aux pieds (5) et dont l'inclinaison par rapport au patin (8) correspond à la position oblique des pieds de support (5).

3. Scie circulaire pour bricoleur suivant la revendication 1, caractérisée par le fait que le carter de protection (23) est réalisé en deux éléments et que des ergots de blocage (25) sont découpés dans les parois latérales du carter de protection (23) et sont repliés, les parois latérales du couvercle (24) du carter de protection s'engageant par leurs bords dans l'espace intérieur compris entre les ergots de blocage (25) et les parois latérales du carter de protection (23), tandis qu'il est prévu une liaison, établie par serrage de vis, du carter de protection (23) et du couvercle (24) de carter de protection.

4. Scie circulaire pour bricoleur selon la revendication 1, comportant une cavité réceptrice (21) montée pivotante et possédant une section transversale approximativement en forme de U, pour le matériau à scier, de manière à réaliser une scie basculante, caractérisée par le fait que le côté de la cavité réceptrice (21), qui est tourné vers la lame de scie (22), est coudé approximativement à mi-distance par rapport à la lame de scie (22).

5. Scie circulaire pour bricoleur suivant la revendication 1 ou 4, comportant un dispositif (29) de rappel d'un élément basculant (13) comportant la cavité réceptrice, caractérisée par le fait que le support du dispositif de rappel est réglable depuis une position libérant la lame de scie dans une position maintenant la lame de scie au moins partiellement à l'état protégé lors du fonctionnement de la scie.

6. Scie circulaire suivant la revendication 5, caractérisée par le fait que l'élément basculant (13) est soutenu élastiquement, par au moins une barre de commande (30), sur un étrier en forme de U (35) dont les branches sont réalisées de manière à être élastiques et sont munies de parties entaillées (36) qui s'encliquettent dans un évidement cruciforme (37) d'une paroi (4) de la console.

7. Scie circulaire pour bricoleur suivant la revendication 4 ou l'une des suivantes, caractérisée par le fait qu'un dispositif supérieur (27) de protection vis-à-vis de la lame comportant un ressort de rappel et une tôle de glissement (28) dirigée vers l'élément basculant (13), en étant de préférence repliée, est monté de façon à pouvoir pivoter sur le carter de protection (23).

8. Scie circulaire pour bricoleur suivant la revendication 1 ou l'une des suivantes, caractérisée par le fait que toutes les parties du châssis et de l'élément basculant (13) sont réalisées sous la forme d'éléments découpés et repliés, constitués en une tôle galvanisée, et sont reliés entre eux exclusivement par des vis.

## Fig. 1

_Fig. 2_

Fig. 3

## Fig. 4

## Fig. 5

Fig. 6

0 071 902

_Fig. 7_

_Fig. 8_

_Fig. 9_